# EUROPÄISCHE PATENTANMELDUNG

(11) **EP 0 584 563 A2**
(43) Veröffentlichungstag der Anmeldung: **02.03.1994**
(21) Anmeldenummer: 93112021.6
(22) Anmeldetag: 28.07.1993
(51) Int. Cl.: A47B 47/00, A47B 57/56, A47B 96/06, F16B 12/44, F16B 12/10, F16B 12/14

(54) **Verbindungselementensatz zum Aufbau von Möbeln**

(30) Priorität: 08.08.1992 DE 9210624 U
(71) Anmelder: Ehreiser, Heinrich, D-12059 Berlin (DE)
(72) Erfinder: Ehreiser, Heinrich, D-12059 Berlin (DE)
(74) Vertreter: Zipse & Habersack

(57) **Zusammenfassung**

Die Erfindung betrifft ein Verbindungselement zum Aufbau von Möbeln mit einem mit Gewindebohrungen versehenen, würfelförmigen Montageteil für die Eckverbindungen. Das Verbindungselement ist gekennzeichnet durch
a) ein quaderförmiges Befestigungselement (1), das einen zylindrischen Hohlraum (2) zur Aufnahme einer durch eine Bohrung (3) reichende, längs im Hohlraum (2) bewegliche Schraube (4) aufweist, wobei in dem Befestigungselement (1) eine schlitzartige, in den zylindrischen Hohlraum (2) reichende Aussparung (12) angeordnet ist,
b) ein Klemmelement, bestehend aus einem ersten quaderförmigen Teil (13) und einem zweiten quaderförmigen Teil (16), wobei beide Teile zusammendrückbar sind, derart, daß beim Eingreifen der Vorsprünge (15, 19) in den beiden Teilen in zu beiden Seiten einer Ecke im Möbelteil verlaufende Nuten (21) das Klemmelement an beliebiger Stelle festlegbar ist,
c) zwei gegeneinander verschiebbare Plättchen (22, 23), von denen eines eine große, konische, exzentrische Bohrung (24) aufweist und das zweite Plättchen (23) eine Gewindebohrung (29) zur Aufnahme einer mit einem konischen Senkkopf versehenen Schraube (28) aufweist.

## Beschreibung

Die Erfindung betrifft einen Verbindungselementensatz zum Aufbau von Möbeln mit einem mit Gewindebohrungen versehenen, würfelförmigen Montageteil für die Eckverbindungen.

In der DE-OS 18 01 507 ist ein Verbindungselement zum Verbinden von stab- oder plattenförmigen Bauteilen beschrieben, das als Würfel ausgebildet ist, der an jeder Seite mit einem Gewindeloch zum Einschrauben von Gewindestiften versehen ist, die mit in die Bauteile eingesetzten Hülsen zusammenfügbar sind.

In der EP 0 344 120 A1 ist ein Verbindungselement für den Aufbau von Möbeln beschrieben, das ebenfalls ein würfelförmiges Montageteil aufweist, in dessen Gewindebohrungen je ein Gewindebolzen eingeschraubt ist, der mit den übrigen Möbelteilen verbindbar ist.

Die vorbekannten Verbindungselemente weisen jedoch den Nachteil auf, daß keine ausreichend geschlossene, kraftschlüssige Verbindung damit erzielt werden kann und sehr häufig Schattenfugen entstehen. Außerdem konnten mit diesem einzigen Verbindungselement nur Eckverbindungen hergestellt werden. Es war mit den vorbekannten Verbindungseiernenten nicht möglich, ganze Möbelgruppen, wie Regale, Gestelle, Schränke od. dgl., aufzubauen.

Der vorliegenden Erfindung liegt die Aufgabe zugrunde, einen Verbindungselementensatz zum Aufbau von Möbeln zu schaffen, mit dem alle Verbindungen, die zum Aufbau eines Möbelstückes erforderlich sind, durchgeführt werden können. Es soll also ein Möbel geschaffen werden, das jederzeit zerstörungsfrei ab- und wieder aufgebaut werden kann und in jeder räumlichen Situation erweiterbar ist.

Zur Lösung der gestellten Aufgabe wird ein Verbindungselementensatz der eingangs genannten Art vorgeschlagen, welcher gekennzeichnet ist durch
a) ein an einem Möbelteil mittels Schraubenbolzen und als Spreizdübel ausgebildeten Steckhülse befestigbares, quaderförmiges Befestigungselement, das einen zylindrischen Hohlraum zur Aufnahme einer durch eine Bohrung reichende, längs im Hohlraum bewegliche Schraube aufweist, die einen breiten Zylinderkopf mit längs von Mantellinien verlaufenden Nuten besitzt und die zum Einschrauben in eine Bohrung in dem würfelförmigen Montageteil dient, wobei in dem Befestigungselement eine schlitzartige, in den zylindrischen Hohlraum reichende Aussparung zum Einsetzen eines die Schraube bewegbaren Werkzeuges angeordnet ist,
b) ein Klemmelement, bestehend aus einem ersten quaderförmigen Teil mit einer Gewindebohrung und einem längsverlaufenden Vorsprung, einem zweiten quaderförmigen Teil, das etwa halb so breit wie das erste quaderförmige Teil ist und an einer Längskante einen längsverlaufenden Vorsprung und an der diagonal gegenüberliegenden Längskante einen kleineren längsverlaufenden Vorsprung, ggf, einen Falz oder eine schrägverlaufende Kante sowie eine Bohrung aufweist, durch die eine in die Gewindebohrung des ersten quaderförmigen Teils eingreifende Schraube verläuft, wodurch beide Teile zusammendrückbar sind, derart, daß beim Eingreifen der Vorsprünge in den beiden Teilen in zu beiden Seiten einer Ecke im Möbelteil verlaufende Nuten das Klemmelement an beliebiger Stelle festlegbar ist,
c) zwei gegeneinander verschiebbare Plättchen, von denen eines eine große, konische, exzentrische Bohrung aufweist und mittels eines Stiftes in das Klemmelement einsteckbar ist und das zweite mit einem Möbelteil durch Schrauben verbindbare Plättchen eine Gewindebohrung zur Aufnahme einer mit einem konischen Senkkopf versehenen Schraube aufweist, die beim Einschrauben gegen die Schrägfläche der konischen Bohrung drückt und somit eine Verspannung bewirkt.

Mit dem Verbindungselementensatz gemäß der Erfindung wird der wesentliche Vorteil erreicht, daß nach dem Aufbau eines Möbelstückes keine Schattenfugen entstehen und daß ferner eine geschlossene Ecke mit einer kraftschlüssigen Verbindung infolge der größeren Reibflächen entsteht. Ferner ist eine sichere, winkelgerechte Verbindung der einzelnen Teile möglich. Unter Verwendung der Klemmelemente des Elementensatzes können Fachböden aus Holz, Glas oder Metall in entsprechende Möbel eingebaut werden, wobei unter Verwendung der gegeneinander verschiebbaren Plättchen mit der exzentrischen Bohrung eine Verspannung, und damit eine Verfestigung, des aufgebauten Möbelstückes erzielt werden kann. Die Klemmelemente des Verbindungselementensatzes gemäß der Erfindung können auch zur Aufnahme mittels entsprechender Bohrungen an den Seitenfüßen von Türscharnieren usw. dienen.

Gemäß einer besonderen Ausführungsform kann die Steckhülse konisch ausgebildet, aus zwei Hälften gebildet und mit Widerhaken versehen sein sowie einen Schraubenbolzen, der ein konisches Ende besitzt aufweisen.

Anhand der Zeichnungen soll am Beispiel bevorzugter Ausführungsformen der Verbindungselementensatz gemäß der Erfindung näher erläutert werden.

In den Zeichnungen zeigt
- Fig. 1: eine perspektivische Explosionszeichnung mit einem Befestigungselement des Verbindungselementensatzes gemäß der Erfindung.
- Fig. 2: zeigt einen Schnitt durch ein eingesetztes Befestigungselement.
- Fig. 3: zeigt einen Schnitt ähnlich Fig. 2 mit einer besonderen Steckhülse.
- Fig. 4: zeigt ein Klemmelement des Verbindungsgelementensatzes gemäß der Erfindung.
- Fig. 5: zeigt in perspektivischer Darstellung den Einsatz des Klemmelementes gemäß Fig. 4 an einem Möbelkantholz.
- Fig. 6: zeigt im Schnitt die zwei eingesetzten, verschiebbaren Plättchen des Verbindungselementes gemäß der Erfindung.
- Fig. 7: zeigt eine Draufsicht auf die genannten Plättchen.
- Fig. 8: zeigt den Einsatz der in Fig. 6 dargestellten Plättchen an einem Möbelgestell.
- Fig. 9: zeigt in perspektivischer Ansicht eine Möglichkeit des Aufbaus einer Regal-Schrankwand mit dem Verbindungselementensatz gemäß der Erfindung.

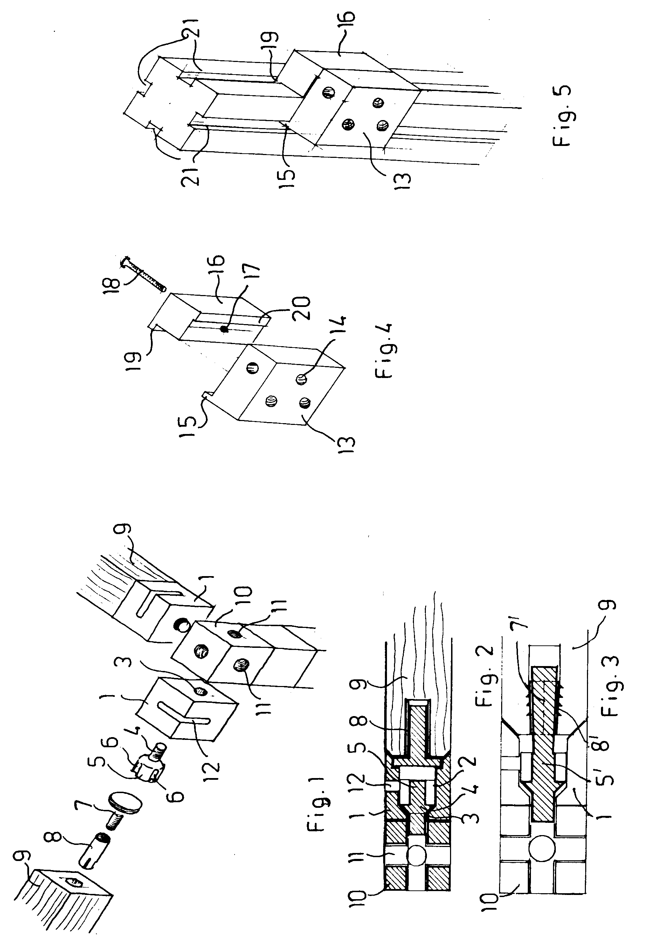

Wie sich aus den Figuren 1, 2 und 3 ergibt, besteht der Verbindungselementensatz zunächst aus einem quaderförmigen Befestigungselement 1, das im Inneren einen zylindrischen Hohlraum 2 aufweist, der eine durch eine Bohrung 3 reichende Schraube 4 längsbeweglich aufnimmt. Die Schraube 4 weist einen breiten Zylinderkopf 5 mit längs von Mantellinien verlaufenden Nuten 6 auf. Zum rückseitigen Abschluß ist in das Befestigungselement ein Schraubenbolzen 7 fest eingesetzt, der in eine Hülse 8 eingeschraubt werden kann, die in ein Möbelteil 9 eingesetzt ist. Die Schraube 4 dient zum Einschrauben in das würfelförmige Montageteil 10, das entsprechende Gewindebohrungen 11 besitzt. Auf diese Weise kann das Befestigungselement 1, und damit das entsprechende Möbelteil 9, ohne Scheinfuge am würfelförmigen Montageteil 10 festgelegt werden. Um die Schraube 4 betätigen zu können, ist in dem quaderförmigen Befestigungselement 1 ein in den Hohlraum 2 reichender, schlitzartiger Einschnitt 12 vorgesehen, durch den ein Werkzeug gesteckt werden kann, das in die Nuten 6 eingreift, um die Schraube 4 zu drehen.

In Fig. 3 ist eine weitere Ausführungsmöglichkeit der Steckhülse 8 dargestellt. Diese ist mit 8' bezeichnet und konisch ausgebildet. Sie besteht aus zwei Hälften und ist mit Widerhaken versehen, wobei ein Schraubenbolzen 5' mit einem entsprechenden, konischen Ende 7' in die Steckhülse 8 eingreift.

Das in Fig. 4 dargestellte Klemmelement besteht aus einem quaderförmigen Teil 13, das eine Gewindebohrung 14 und an einer Längskante einen Vorsprung 15 aufweist. Das Klemmelement weist ferner ein zweites quaderförmiges Teil 16 auf, das nur etwa halb so breit wie das quaderförmige Teil 13 ist und eine Bohrung 17 aufweist, durch die eine Schraube 18 gesteckt werden kann, die in die Bohrung 14 des Teiles 13 eingeschraubt werden kann. Das quaderförmige Teil 16 besitzt ferner an einer Längskante einen Vorsprung 19 und an der diagonal gegenüberliegenden Längskante einen kürzeren Vorsprung 20.

Wie sich aus Fig. 5 ergibt, können beim Zusammendrücken der beiden Teile 13 und 16 die Vorsprünge 15 und 19 in Nuten 21 eines Möbelteiles eingreifen. Durch Anziehen der Schraube 18 wird das Klemmelement an der gewünschten Stelle mit den Vorsprüngen 15 und 19 in den Nuten 21 festgelegt.

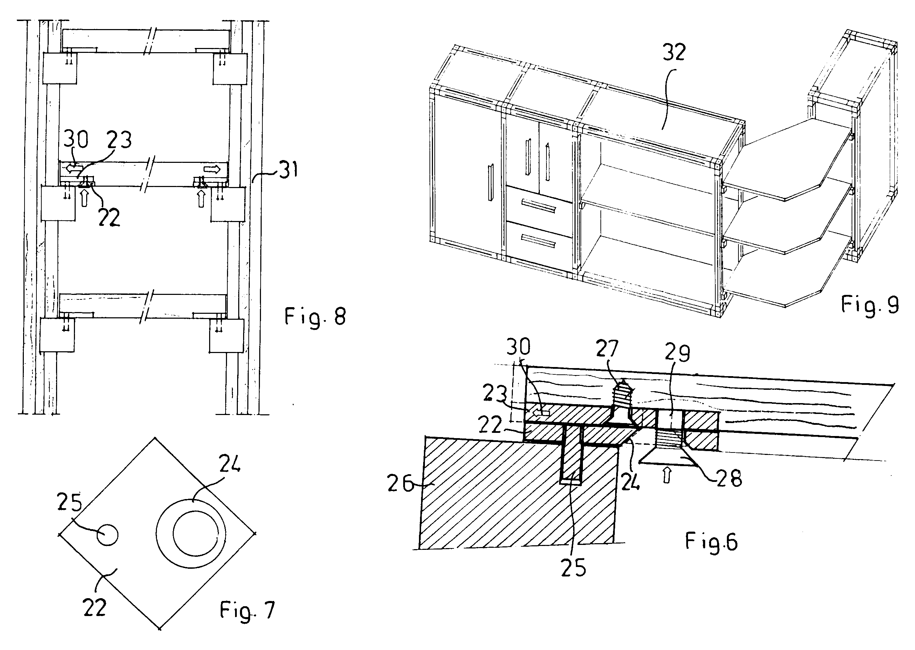

Wie sich aus den Figuren 6 und 7 ergibt, besteht ein weiteres Teil des Verbindungselementes gemäß der Erfindung aus zwei gegeneinander verschiebbharen Plättchen 22, 23, wovon das eine Plättchen 22 eine große, exzentrische, konische Bohrung 24 aufweist. Das Plättchen 22 ist ferner mit einem Stift 25 versehen, mit dem es in ein Möbelteil 26 eingesteckt werden kann. Das Plättchen 23 ist mittels Senkschrauben 27 an einem Möbelteil, beispielsweise an einem Fachboden od. dgl., befestigt. Durch Einschrauben einer weiteren, breiten Senkschraube 28 in eine entsprechende Bohrung 29 kann infolge der konischen Bohrung 24 das Teil in Richtung des Pfeiles 30 gespannt werden, wodurch sich eine außerordentlich gute Verspannung, insbesondere bei Fachböden od. dgl., ergibt. Diese Verhältnisse sind in Fig. 8 dargestellt, wo innerhalb eines Gestelles 31 der mittlere Fachboden mit der Plättchenanordnung gemäß Fig. 6 versehen ist.

Fig. 9 zeigt ein Beispiel einer Regalwand 32, die mit dem Verbindungselementensatz gemäß der Erfindung aufgebaut ist. Diese Regalwand kann aus Schrankteilen, Eckfachböden usw. aufgebaut werden.

## Patentansprüche

1. Verbindungselementensatz zum Aufbau von Möbeln mit einem mit Gewindebohrungen versehenen, würfelförmigen Montageteil für die Eckverbindungen, **gekennzeichnet durch**
a) ein an einem Möbelteil (9) mittels Schraubenbolzen (7) und einer als Spreizdübel ausgebildeten Steckhülse (8) befestigbares, quaderförmiges Befestigungselement (1), das einen zylindrischen Hohlraum (2) zur Aufnahme einer durch eine Bohrung (3) reichende, längs im Hohlraum (2) bewegliche Schraube (4) aufweist, die einen breiten Zylinderkopf (5) mit längs von Mantellinien verlaufenden Nuten (6) besitzt und die zum Einschrauben in eine Bohrung (11) in dem würfelförmigen Montageteil (10) dient, wobei in dem Befestigungselement (1) eine schlitzartige, in den zylindrischen Hohlraum (2) reichende Aussparung (12) zum Einsetzen eines die Schraube bewegbaren Werkzeuges angeordnet ist,
b) ein Klemmelement, bestehend aus einem ersten quaderförmigen Teil (13) mit einer Gewindebohrung (14) und einem längsverlaufenden Vorsprung (15), einem zweiten quaderförmigen Teil (16), das etwa halb so breit wie das erste quaderförmige Teil (13) ist und an einer Längskante einen längsverlaufenden Vorsprung (19) und an der diagonal gegenüberliegenden Längskante einen kleineren längsverlaufenden Vorsprung (20), ggf. einen Falz oder eine schrägverlaufende Kante sowie eine Bohrung (17) aufweist, durch die eine in die Gewindebohrung (14) des ersten quaderförmigen Teils eingreifende Schraube (18) verläuft, wodurch beide Teile zusammendrückbar sind, derart, daß beim Eingreifen der Vorsprünge (15, 19) in den beiden Teilen in zu beiden Seiten einer Ecke im Möbelteil verlaufende Nuten (21) das Klemmelement an beliebiger Stelle festlegbar ist,
c) zwei gegeneinander verschiebbare Plättchen (22, 23), von denen eines eine große, konische, exzentrische Bohrung (24) aufweist und mittels eines Stiftes (25) in das Klemmelement (26) einsteckbar ist und das zweite mit einem Möbelteil durch Schrauben (27) verbindbare Plättchen (23) eine Gewindebohrung (29) zur Aufnahme einer mit einem konischen Senkkopf versehenen Schraube (28) aufweist, die beim Einschrauben gegen die Schrägfläche der konischen Bohrung (24) drückt und somit eine Verspannung bewirkt.

2. Verbindungselementensatz nach Anspruch 1, **dadurch gekennzeichnet**, daß die Steckhülse (8') konisch ausgebildet ist, aus zwei Hälften besteht und mit Widerhaken versehen ist sowie einen Schraubenbolzen (5') mit einem entsprechenden konischen Ende (7') aufweist.
